(19) Europäisches Patentamt
European Patent Office
Office européen des brevets

(11) **EP 3 693 767 A1**

(12) **EUROPÄISCHE PATENTANMELDUNG**

(43) Veröffentlichungstag:
**12.08.2020  Patentblatt 2020/33**

(51) Int Cl.:
*G02B 3/00* (2006.01)     *G02B 3/02* (2006.01)
*G02B 3/06* (2006.01)     *G02B 19/00* (2006.01)

(21) Anmeldenummer: **19155464.1**

(22) Anmeldetag: **05.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fisba AG**
**9016 St. Gallen (CH)**

(72) Erfinder:
• **Moser, Hansruedi**
  **9452 Hinterforst (CH)**
• **Wüst, Pascal**
  **9463 Oberriet (CH)**
• **Forrer, Martin**
  **9050 Appenzell (CH)**

(74) Vertreter: **Hepp Wenger Ryffel AG**
**Friedtalweg 5**
**9500 Wil (CH)**

(54) **VORRICHTUNG ZUR LICHTEMISSION**

(57)    Die Erfindung betrifft eine Vorrichtung (1) zur Lichtemission, eine Strahlkollimationslinse (3) und ein Verfahren zum Herstellen einer Strahlkollimationslinse (3). Die Vorrichtung (1) umfasst mindestens eine Laserlichtquelle (2) sowie eine Strahlkollimationslinse (3), insbesondere zur Fast-Axis Kollimation, wobei die Strahlkollimationslinse (3) mindestens ein bikonvexes Kollimationselement (4) umfasst und aus Quarzglas gefertigt ist, bevorzugt in einem faserziehverfahren. Die Laserlichtquelle (2) emittiert sichtbares Laserlicht, insbesondere in einem Wellenlängenbereich von 300-550 nm.

**Fig. 1**

EP 3 693 767 A1

**Beschreibung**

Die Erfindung betrifft eine Vorrichtung zur Lichtemission, Strahlkollimationslinse und ein Verfahren zum Herstellen einer Strahlkollimationslinse.

Vorrichtungen zur Lichtemission können als HochleistungsDiodenlaser eingesetzt werden. Typischerweise finden derartige Vorrichtungen Anwendung bei Lichtemittern mit einem asymmetrischen Strahlfeld, das eine sogenannte "Fast-Axis" und eine sogenannte "Slow-Axis" aufweist.

Die Fast-Axis bezieht sich auf eine vertikale Achse (senkrecht zum Halbleiterwafer), die senkrecht zur Slow-Axis steht (parallel zur Stirnseite der Halbleiterwafer). Die Slow-Axis und die Fast-Axis sind senkrecht zueinander und orthogonal zur Ausbreitungsrichtung des Strahls (z-Achse). Entlang der Ausbreitungsrichtung hat ein Einzelemitter mit zum Beispiel einer Dimension in der Grössenordnung von 1 micron in der Fast Axis eine numerische Apertur von 0.5 - 0.7 und in der Slow-Axis eine numerische Apertur von 0.05 - 0.2.

Die gebräuchlichsten Kollimatoren für schnelle Achsen sind planzylindrische Linsen. Diese werden verwendet, um eine Kollimation mit geringer Aberration für die Fast-Axis mit hoher numerischer Apertur zu ermöglichen.

Solche Kollimatoren werden typischerweise aus hochwertigem Glas hergestellt. Ein hochbrechendes Material minimiert den maximalen Durchhang der Linse und den Grad der Oberflächenneigung, der erforderlich ist, um die geforderte Brechung zu erreichen. Für unkritische Leistungsanforderungen können auch homogene zylindrische Stablinsen, d.h. Fasern, verwendet werden.

Aus der GB2510401 A ist ein mikrooptisches Element zur Verwendung mit einem Laserdiodenstapel vorgesehen ist, wobei das Element eine Vielzahl von bikonvexen Fast-Axis-Kollimatorelementen umfasst, die als monolithische Anordnung ausgebildet sind. Dabei ist die Anordnung von Einlasslinsen auf einer ersten Oberfläche des Elements und eine Anordnung von Auslasslinsen auf einer zweiten Oberfläche, die der ersten Oberfläche gegenüberliegt, des Elements vorgesehen. Die Anordnung der Einlass- und Auslasslinsen kann der Anordnung einer Vielzahl von Einzelemittern, die in einer Reihe oder in einem zweidimensionalen Feld angeordnet sind, angepasst werden. Das monolithische Element kann unter Einsatz von Laser-Mikrobearbeitung aus Quarzglas hergestellt werden.

Kollimationselemente mit Gläsern, die hohen Transmissionswerte aufweisen, werden vor allem für Diodenlaser in einem Wellenlängenbereich zwischen 800 und 1000nm verwendet.

In einem Wellenlängenbereich kleiner als 550nm, insbesondere im Bereich von 400-500nm, stehen ebenfalls Lichtemitter mit hohen Leistungen zur Verfügung. Die Auswahl an Glasmaterialien mit hohen Transmissionswerten ist für diesen Wellenlängenbereich eingeschränkt.

Ausserdem sind die Verarbeitungsmethoden aufwendig und damit sehr teuer.

Es ist Aufgabe der Erfindung die Nachteile des Standes der Technik zu beheben und insbesondere eine Vorrichtung zur Lichtemission, eine Strahlkollimationslinse sowie ein Verfahren zum Herstellen einer Strahlkollimationslinse zur Verfügung zu stellen, mit welchen kostengünstig eine gute optische Kollimationsqualität zur Verfügung gestellt werden kann.

Die Aufgabe wird gelöst durch eine Vorrichtung zur Lichtemission, umfassend mindestens eine Laserlichtquelle sowie mindestens oder genau eine Strahlkollimationslinse, insbesondere zur Fast-Axis Kollimation.

Die Strahlkollimationslinse umfasst mindestens ein bikonvexes Kollimationselement und ist aus Quarzglas gefertigt.

Die Laserlichtquelle emittiert sichtbares Laserlicht, insbesondere mit Wellenlängen von kleiner oder gleich 550nm, im Speziellen in einem Wellenlängenbereich von 300nm bis 550nm, weiter insbesondere von 400-500 nm.

Bei kleineren Wellenlängen steigen die industriell verfügbaren Leistungen stark an und damit auch die Anforderungen an eine minimale Absorption in der Strahlkollimationslinse. Hohe Leistungen können zu einer starken Erwärmung führen und es besteht das Risiko der Defokussierung und damit einer Verschlechterung der Strahlqualität.

Herkömmliche Fast-Axis-Kollimationselemente mit einem Brechungsindex n von etwa 1.80 zeigen bereits bei kleinen Leistungen eine starke Temperaturerhöhung.

Kollimationselemente aus Quarzglas mit einem Brechungsindex von etwa 1.45 weisen eine geringe Temperaturerhöhung bis zu Leistungen von über 200W auf. Die Strahlqualität kann also über einen grossen Leistungsbereich gewährleistet werden.

In einer vorzugsweisen Ausführung der Vorrichtung weist diese eine Vielzahl von Laserlichtquellen auf. Die Laserlichtquellen können in einem zweidimensionalen Feld angeordnet sein. Bevorzugt sind Laserlichtquellen in einer Reihe nebeneinander angeordnet.

Die Strahlkollimationslinse weist bevorzugt ein Feld von bikonvexen Kollimationselementen auf, das der Anordnung der Laserlichtquellen entspricht. Vorteilhafterweise ist die Strahlkollimationslinse monolithisch ausgebildet.

Der Nachteil des kleineren Brechungsindexes von Quarzglas kann durch eine entsprechende Form der Eintritts- und Austrittsflächen kompensiert werden. Das bikonvexe Kollimationselement kann auf der Austrittsseite eine azylindrische Form aufweisen und auf der Eintrittsseite eine zylindrische Form oder eine azylindrische Form.

Mit "zylindrischer" Form ist gemeint, dass der Querschnitt des Kollimationselements eine Kreisform aufweist, während bei einer azylindrischen Form eine Abweichung vom Kreissegment vorliegt, beispielsweise die Form eines Polynoms.

Bevorzugt ist die gesamte Eintrittsfläche des bikonvexen Kollimationselements konvex gekrümmt und/oder die gesamte Austrittsfläche des bikonvexen Kollimationselements ebenfalls konvex gekrümmt. Die Oberfläche des Kollimationselements hat somit eine einfache Form, bei der keine konkaven oder planen Teilflächen vorliegen. Dies erleichtert das Herstellungsverfahren.

Besonders bevorzugt ist die Eintrittsfläche der gesamten Strahlkollimationslinse konvex gekrümmt und/oder die Austrittsfläche der gesamten Strahlkollimationslinse ebenfalls konvex gekrümmt, insbesondere auch dann, wenn die Vorrichtung zur Lichtemission mehrere Emitter umfasst und eine Strahlkollimationslinse für diese mehreren Emitter verwendet wird.

In einer besonders vorteilhaften Ausführungsform der Vorrichtung ist die Strahlkollimationslinse stabförmig ausgebildet. Stabförmig heisst, dass die die Linse zylinderförmig ist und bevorzugt in einer Richtung quer zur Lichtausbreitung, nämlich in Fast-Axis Richtung, länger ist als in der Richtung der Lichtausbreitung.

Die Strahlkollimationslinse kann dabei derart als bikonvexer Zylinder ausgebildet sein, dass er für eine Vielzahl von in einer Reihe angeordneter Laserlichtquellen benutzt werden kann.

Der bikonvexe Zylinder kann mit einem Querschnitt ausgestattet sein, der auf der Eintrittsseite ein Kreissegment aufweist.

Eine solche Strahlkollimationslinse besitzt eine einfache Geometrie und kann daher unaufwendig und kostengünstig hergestellt werden, zum Beispiel in einem Faserziehverfahren.

Stabförmige ausgebildete Strahlkollimationslinsen können ausserdem leicht zu einem Strahlkollimationslinsenfeld für in einem zweidimensionalen Feld angeordnete Laserlichtquellen kombiniert werden, indem Strahlkollimationslinsen zum Beispiel an den Längsseiten aneinander geklebt werden.

Die Aufgabe wird gelöst durch eine Strahlkollimationslinse, insbesondere zur Fast-Axis Kollimation, für eine Vorrichtung zur Lichtemission, wie sie oben beschrieben ist.

Die Strahlkollimationslinse umfasst mindestens ein bikonvexes Kollimationselement und ist aus Quarzglas gefertigt. Die Eintrittsfläche des bikonvexen Kollimationselements ist konvex gekrümmt und die Austrittsfläche des bikonvexen Kollimationselements ist auch konvex gekrümmt, sodass trotz des niedrigen Brechungsindexes des Quarzglases eine ausreichende Brechung erreicht werden kann.

In einer vorteilhaften Ausführungsform weist das bikonvexe Kollimationselement eine Eintrittsfläche mit einer Fläche von $0.2mm^2$-$10mm^2$, und/oder mit einer Länge von 2mm-12mm und/oder mit einer Höhe von 0.1mm-0.85mm auf.

Mit Eintrittsfläche ist die der Lichtquelle zugewandte Fläche des bikonvexe Kollimationselements gemeint.

In einer vorteilhaften Ausführungsform weist das bikonvexe Kollimationselement eine Austrittsfläche mit einer Fläche von $0.6 mm^2$-$30mm^2$ aufweist und/oder mit einer Länge von 2mm-12mm und/oder einer Höhe von 0.3mm-2.5mm auf.

Mit Austrittsfläche ist die der Lichtquelle abgewandte Fläche des bikonvexe Kollimationselements gemeint.

Das bikonvexe Kollimationselement kann auf der Eintrittsseite eine maximale Krümmungstiefe von 0.1mm aufweisen und/oder auf der Austrittsseite eine maximale Krümmungstiefe von 0.5mm.

Das bikonvexe Kollimationselement kann eine Brennweite von 0.2mm bis 1.8mm aufweisen.

Die Angaben der Höhen betreffen die optisch wirksamen Bereiche. Da der Eintritt nah am Emitter ist und eine grosse Divergenz besteht, ist die optisch wirksame Höhe an der Eintrittsseite kleiner als an der Austrittsseite. Das Kollimationselement kann aber so gefertigt sein, dass die Eintritts- und Austrittseiten in etwa gleiche Höhen aufweisen.

Die oben genannten Abmessungen können jeweils auch für die gesamte Strahlkollimationslinse gelten.

In einer bevorzugten Ausführungsform ist die Strahlkollimationslinse in einem Faserziehverfahren hergestellt. Die Strahlkollimationslinse weist dann bevorzugt insgesamt die Form eines bikonvexen Zylinders auf.

Die Umfangsflächen der Strahlkollimationslinse, also die Flächen auf dem Zylindermantel, sind glänzend und formpräzise. Die Strahlkollimationslinse weist keine matten Teilflächen auf dem Umfang auf, auch nicht an den nichtoptischen, nach oben und unten gerichteten Umfangsflächen. An der Umfangsfläche sind weder Sägespuren noch Spuren eines Presswerkzeugs erkennbar.

Die nicht optischen Seitenflächen quer zur Zylinderaches können durch einen Vereinzelungsschritt matt sein, und beispielweise Sägespuren aufweisen.

In einer bevorzugten Ausführungsform ist die Strahlkollimationslinse stabförmig ausgebildet.

Die Aufgabe wird ausserdem gelöst durch ein Verfahren zum Herstellen einer Strahlkollimationslinse wie oben beschrieben mit den folgenden Schritten.

Zunächst wird eine bikonvexe Vorform aus Quarzglas zur Verfügung gestellt. Deren Querschnittsfläche ist insbesondere um einen Faktor 100 bis 10000 grösser als die Querschnittsfläche des Kollimationselements der herzustellenden Strahlkollimationslinse.

Die Vorform wird mit konventionellen Herstellverfahren für Glas, wie Schleifen und Polieren, hergestellt. Die notwendige Formgenauigkeit der Linse kann durch die Skalierung durch eine konventionelle Fertigung einer grossen Vorform mit vertretbarem Aufwand realisiert werden.

Es erfolgt ein Erwärmen der Vorform, insbesondere auf Temperaturen von 2000-2200°C. Dazu wird die Vorform, welche eine zu dem zu fertigen Kollimationselement kongruente Form aufweist, in einen entsprechenden Ofen eingeführt.

Nach dem Erwärmen wird die Strahlkollimationslinse abgezogen, wobei die Skalierung erfolgt, das heisst die Querschnittsfläche verkleinert wird. Dies geschieht typischerweise mit einer Abzugsvorrichtung, welche Rollen umfasst. Die Abzugskraft wird an die gewünschte Skalierung angepasst.

Beim Abziehen, nach dem Austritt aus dem Ofen kann die Strahlkollimationslinse noch eine Temperatur von einigen hundert Grad aufweisen, was deutlich unterhalb der Glasübergangstemperatur ist, und ihren Endquerschnitt aufweisen.

Die Abkühlung kann an Luft erfolgen.

Anschliessend können stabförmige Linsen in einer gewünschten Länge abgetrennt werden.

Durch die grosse Skalierung von der Vorform auf das Endteil können die Einzelkomponenten kostengünstig in hohen Stückzahlen hergestellt werden.

Wenn es gewünscht ist, können anschliessend stabförmige Strahlkollimationslinse zu einem zweidimensionalen Kollimationsfeld zusammengeklebt werden.

Die Aufgabe wird ausserdem gelöst durch die Verwendung einer Vorrichtung zur Lichtemission wie sie oben beschrieben ist, zur Bearbeitung von Buntmetallen.

Für die Bearbeitung von Buntmetallen eignen sich kurze Wellenlängen, um eine effiziente Bearbeitung zu ermöglichen.

Hochleistungsdiodenlaser mit kürzeren Wellenlängen können auf einfache und kostengünstige Weise mit einer Strahlkollimationslinse, wie sie oben beschrieben ist, zur Verfügung gestellt werden.

Anhand der folgenden Figuren wird die Erfindung erklärt. Es zeigen:

Figur 1:    eine erfindungsgemässe Vorrichtung im Querschnitt;

Figur 2:    eine erfindungsgemässe Strahlkollimationslinse in perspektivischer Darstellung;

Figur 3:    eine schematische Darstellung der Herstellung einer Strahlkollimationslinse.

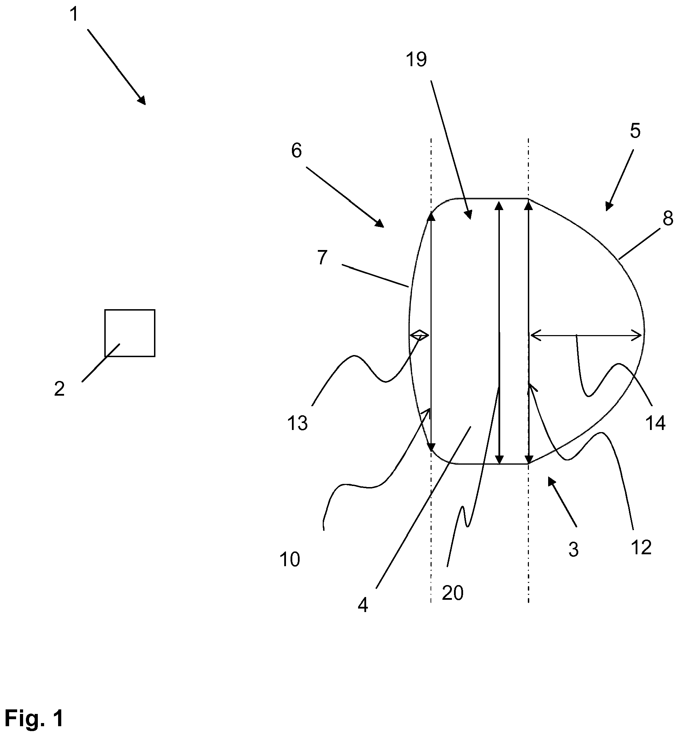

Figur 1 zeigt eine Vorrichtung 1 zur Lichtemission im Querschnitt. Die Vorrichtung 1 umfasst mehrere in einer Reihe angeordnete Laserlichtquellen 2, sowie eine Strahlkollimationslinse 3 zur Fast-Axis Kollimation.

Die Strahlkollimationslinse 3 umfasst bikonvexe Kollimationselemente 4 und ist aus Quarzglas gefertigt.

Die Laserlichtquellen 1 emittieren sichtbares Laserlicht mit Wellenlängen von kleiner 550nm, insbesondere in einem Wellenlängenbereich von 300-500 nm.

Das bikonvexe Kollimationselement 4 weist auf der Eintrittsseite 6 eine maximale Krümmungstiefe 13 von 0.1mm auf.

Das bikonvexe Kollimationselement 4 weist auf der Austrittsseite 5 eine maximale Krümmungstiefe 14 von 0.5mm auf.

Die Eintrittsfläche 7 hat eine Höhe 10 von 0.1mm-0.85mm, die Austrittsfläche 8 eine Höhe 12 von 0.3mm-2.5mm.

Die Strahlkollimationslinse 3 ist bevorzugt so gefertigt, dass ein Grossteil des Bereichs 19 zwischen Eintritts- und Austrittsseite eine konstante Höhe 20 aufweist.

Die Kontur der Austrittsseite 5 kann dem folgenden Polynom folgen.

$$z(h) = \frac{\dfrac{h^2}{R}}{1 + \sqrt{1 - (1+k)\dfrac{h^2}{R^2}}} + \sum_{n=1}^{N} A_n \cdot h^n$$

Bevorzugt folgt die Form einem Polynom zehnter Ordnung. Die Koeffizienten sind beispielsweise
R=-0.3mm;
k=-1;
$A_4$=-3.2812 mm$^{-3}$,
$A_6$=16.414 mm$^{-5}$,
$A_8$=-241.567 mm$^{-7}$ und
$A_{10}$=822.595 mm$^{-9}$.

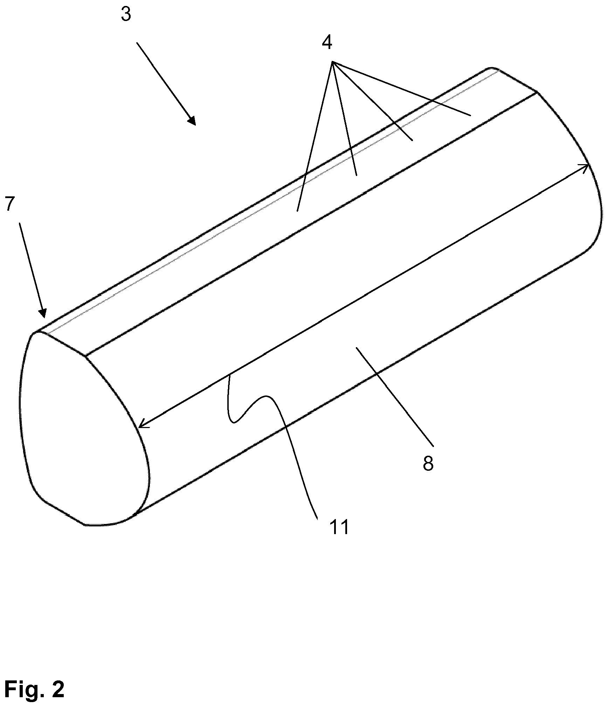

Figur 2 zeigt eine erfindungsgemässe Strahlkollimationslinse 3 in perspektivischer Darstellung. Die Strahlkollimationslinse 3 ist stabförmig ausgebildet, so dass die nebeneinander liegenden bikonvexen Kollimationselemente 4 ineinander übergehen und eine gemeinsame Eintrittsfläche 7 und Austrittsfläche 8 bilden.

Die Eintrittsfläche 7 und die Austrittsfläche 8 haben eine Länge 11 von 2 mm-12 mm.

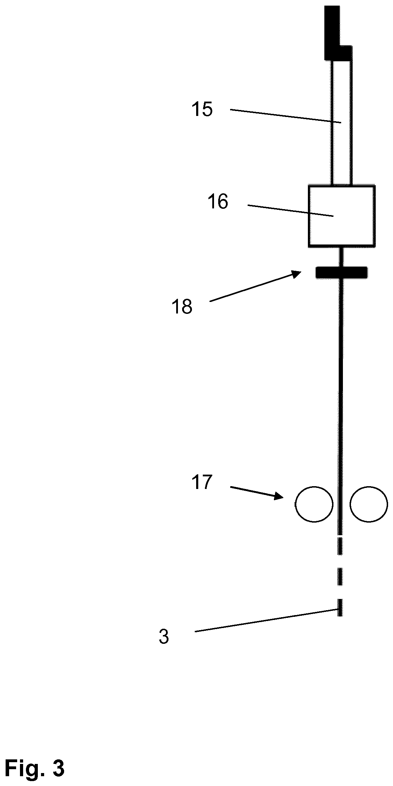

Figur 3 zeigt eine schematische Darstellung der Herstellung einer Strahlkollimationslinse 3.

Zunächst wird eine bikonvexe Vorform 15 aus Quarzglas zur Verfügung gestellt.

In einem Ofen 16 wird die Vorform 15 auf Temperaturen von 2000-2200°C erwärmt.

Nach dem Erwärmen wird die Strahlkollimationslinse 3 mit einer Rollenabzugsvorrichtung 17 abgezogen, wobei die Querschnittsfläche verkleinert wird.

Der Querschnitt wird nach Austritt aus dem Ofen 16 mit einem Messsystem 18 überprüft.

Die Abkühlung erfolgt an Luft.

Anschliessend werden stabförmige Strahlkollimationslinsen 3 in einer gewünschten Länge abgetrennt.

**Patentansprüche**

1.  Vorrichtung zur Lichtemission, umfassend mindestens eine Laserlichtquelle (2) sowie mindestens eine Strahlkollimationslinse (3), insbesondere zur Fast-Axis Kollimation, wobei die Strahlkollimationslinse (3) mindestens ein bikonvexes Kollimationselement (4) umfasst und aus Quarzglas gefertigt ist, **dadurch**

**gekennzeichnet, dass**

die Laserlichtquelle (2) sichtbares Laserlicht emittiert, insbesondere mit Wellenlängen kleiner als 550nm, weiter insbesondere in einem Wellenlängenbereich von 300-500 nm.

2. Vorrichtung nach Anspruch 1, wobei die Vorrichtung (1) eine Vielzahl von Laserlichtquellen (2) aufweist und die Strahlkollimationslinse (3) bevorzugt ein Feld von bikonvexen Kollimationselementen (4) aufweist,

insbesondere die Laserlichtquellen (2) nebeneinander angeordnet sind.

3. Vorrichtung nach Anspruch 1 oder 2, wobei das bikonvexe Kollimationselement (4) auf der Austrittsseite (5) eine azylindrische Form aufweist und auf der Eintrittsseite (6) eine zylindrische Form oder eine azylindrische Form aufweist.

4. Vorrichtung nach einem der vorhergehenden Ansprüche, wobei das die Eintrittsfläche (7) des bikonvexen Kollimationselements (4) konvex gekrümmt ist und die Austrittsfläche (8) des bikonvexen Kollimationselements (4) konvex gekrümmt ist.

5. Vorrichtung nach einem der vorhergehenden Ansprüche, wobei die Strahlkollimationslinse (3) stabförmig ausgebildet ist.

6. Strahlkollimationslinse für eine Vorrichtung zur Lichtemission, insbesondere nach einem der Ansprüche 1-5, insbesondere zur Fast-Axis Kollimation, wobei das Strahlkollimationselement mindestens ein bikonvexes Kollimationselement umfasst und aus Quarzglas gefertigt ist, **dadurch gekennzeichnet, dass** die Eintrittsfläche des bikonvexen Kollimationselements konvex gekrümmt ist und die Austrittsfläche des bikonvexen Kollimationselements konvex gekrümmt ist.

7. Strahlkollimationslinse nach Anspruch 6, wobei das bikonvexe Kollimationselement

- eine Eintrittsfläche (7) mit einer Fläche von $0.2mm^2$-$10mm^2$ und/oder eine Eintrittsfläche (7) mit einer Länge (9) von 2 mm-12 mm und/oder eine Eintrittsfläche (7) mit einer Höhe (10) von 0.1mm-0.85mm aufweist und/oder
- eine Austrittsfläche (8) mit einer Fläche von $0.6mm^2$-$30mm^2$ aufweist und/oder eine Austrittsfläche (8) mit einer Länge (11) von 2mm-12mm und/oder eine Austrittsfläche (8) mit einer Höhe (12) von 0.3mm-2.5 mm und/oder
- auf der Eintrittsseite (6) eine maximale Krümmungstiefe (13) von 0.1mm aufweist und/oder
- auf der Austrittsseite (5) eine maximale Krümmungstiefe (14) von 0.5mm aufweist und/oder

- eine Brennweite von 0.2mm bis 2mm, bevorzugt von 0.2-1.8mm, aufweist.

8. Strahlkollimationslinse nach Anspruch 6 oder 7, wobei die Strahlkollimationslinse (3) in einem Faserziehverfahren hergestellt ist.

9. Strahlkollimationslinse nach Anspruch 6 bis 8, wobei die Strahlkollimationslinse (3) stabförmig ausgebildet ist.

10. Verfahren zum Herstellen einer Strahlkollimationslinse (3) mit mindestens einem bikonvexen Kollimationselement (4) gemäss Anspruch 6 bis 9, umfassend die folgenden Schritte

- Bereitstellen einer bikonvexen Vorform (15) aus Quarzglas, deren Querschnittsfläche insbesondere um einen Faktor 100 bis 10000 grösser ist als die Querschnittsfläche des Kollimationselements (4) der herzustellenden Strahlkollimationslinse (3);
- Erwärmen der Vorform (15), insbesondere auf Temperaturen von 2000-2200°C;
- Abziehen der Strahlkollimationslinse (3);
- Abkühlen;
- insbesondere Abtrennen der gewünschten Länge.

11. Verwendung einer Vorrichtung (1) zur Lichtemission nach einem der Ansprüche 1-5 zur Bearbeitung von Buntmetallen.

1

19

6

5

7

8

13

14

10

4

20

3

12

**Fig. 1**

**Fig. 2**

15

16

18

17

3

**Fig. 3**

**Europäisches Patentamt**
**European Patent Office**
**Office européen des brevets**

# EUROPÄISCHER RECHERCHENBERICHT

**Nummer der Anmeldung**

EP 19 15 5464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/249342 A1 (SCAGGS MICHAEL J [US]) 13. Oktober 2011 (2011-10-13) | 1,6 | INV. G02B3/00 G02B3/02 G02B3/06 G02B19/00 |
| Y | * Absätze [0007], [0046]; Abbildung 4 * ----- | 2,8,10 | |
| X,D | GB 2 510 401 A (POWERPHOTONIC LTD [GB]) 6. August 2014 (2014-08-06) | 6-8 | |
| Y | * Seite 5, Zeilen 13-14 * <br> * Seite 13, Zeilen 12-19; Abbildung 3 * <br> * Seite 17, Zeilen 12-16 * <br> * Seite 18, Zeilen 1-9; Abbildung 9 * ----- | 2 | |
| X | US 6 154 282 A (LILGE LOTHAR [CA] ET AL) 28. November 2000 (2000-11-28) <br> * Spalte 3, Zeilen 33-47 * <br> * Spalte 3, Zeile 66 - Spalte 4, Zeile 18; Abbildung 4 * ----- | 1,4,6 | |
| X | US 8 102 581 B2 (VOSS ANDREAS [DE]; HUONKER MARTIN [DE] ET AL.) 24. Januar 2012 (2012-01-24) <br> * Spalte 4, Zeilen 9-10,21-23 * ----- | 6 | |
| X | US 2011/103056 A1 (WOLAK EDMUND L [US] ET AL) 5. Mai 2011 (2011-05-05) <br> * Absätze [0010], [0051], [0064], [0065]; Abbildung 7a * ----- | 1-6,9 | **RECHERCHIERTE SACHGEBIETE (IPC)** <br><br> G02B |
| Y | DE 603 04 841 T2 (CORNING INC [US]) 23. November 2006 (2006-11-23) <br> * Absatz [0057] * ----- | 8,10 | |

~~Der vorliegende Recherchenbericht wurde für alle Patentans~~prüche erstellt

| Recherchenort | Abschlußdatum der Recherche | Prüfer |
|---|---|---|
| München | 30. September 2019 | Mollenhauer, Ralf |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
  Dokument

EPO FORM 1503 03.82 (P04C03)

Europäisches
Patentamt

European
Patent Office

Office européen
des brevets

Nummer der Anmeldung

EP 19 15 5464

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-10

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**

**European Patent Office**

**Office européen des brevets**

## MANGELNDE EINHEITLICHKEIT DER ERFINDUNG ERGÄNZUNGSBLATT B

**Nummer der Anmeldung**

EP 19 15 5464

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 2, 4, 6

   Kollimation einer Laserlichtquellen-Matrix
   ---

2. Ansprüche: 3, 7

   Kompensation des Nachteils des kleineren Brechungsindexes von Quarzglas
   ---

3. Ansprüche: 5, 8-10

   Verwendung eines kostengünstiges Herstellungsverfahrens
   ---

4. Anspruch: 11

   Bearbeitung von Buntmetallen
   ---

# EP 3 693 767 A1

## ANHANG ZUM EUROPÄISCHEN RECHERCHENBERICHT
## ÜBER DIE EUROPÄISCHE PATENTANMELDUNG NR.

EP 19 15 5464

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2019

| Im Recherchenbericht angeführtes Patentdokument | Datum der Veröffentlichung | Mitglied(er) der Patentfamilie | Datum der Veröffentlichung |
|---|---|---|---|
| US 2011249342 A1 | 13-10-2011 | CN 103109424 A | 15-05-2013 |
| | | EP 2556570 A2 | 13-02-2013 |
| | | JP 2013524539 A | 17-06-2013 |
| | | KR 20130100890 A | 12-09-2013 |
| | | US 2011249342 A1 | 13-10-2011 |
| | | WO 2011127356 A2 | 13-10-2011 |
| GB 2510401 A | 06-08-2014 | KEINE | |
| US 6154282 A | 28-11-2000 | CA 2280398 A1 | 26-04-2000 |
| | | US 6154282 A | 28-11-2000 |
| US 8102581 B2 | 24-01-2012 | AT 516516 T | 15-07-2011 |
| | | CN 101438195 A | 20-05-2009 |
| | | DE 202005015719 U1 | 08-12-2005 |
| | | EP 1934644 A1 | 25-06-2008 |
| | | JP 4681651 B2 | 11-05-2011 |
| | | JP 2009510535 A | 12-03-2009 |
| | | US 2008259427 A1 | 23-10-2008 |
| | | WO 2007042198 A1 | 19-04-2007 |
| US 2011103056 A1 | 05-05-2011 | CN 102089943 A | 08-06-2011 |
| | | CN 107085288 A | 22-08-2017 |
| | | EP 2283549 A2 | 16-02-2011 |
| | | JP 5696298 B2 | 08-04-2015 |
| | | JP 5900934 B2 | 06-04-2016 |
| | | JP 2011520292 A | 14-07-2011 |
| | | JP 2014241430 A | 25-12-2014 |
| | | US 2011103056 A1 | 05-05-2011 |
| | | US 2014300971 A1 | 09-10-2014 |
| | | WO 2009137703 A2 | 12-11-2009 |
| DE 60304841 T2 | 23-11-2006 | AU 2003219941 A1 | 22-09-2003 |
| | | CN 1650207 A | 03-08-2005 |
| | | DE 60304841 T2 | 23-11-2006 |
| | | EP 1481274 A1 | 01-12-2004 |
| | | JP 5070330 B2 | 14-11-2012 |
| | | JP 2005519342 A | 30-06-2005 |
| | | JP 2011123493 A | 23-06-2011 |
| | | TW I252338 B | 01-04-2006 |
| | | US 2003165291 A1 | 04-09-2003 |
| | | WO 03076993 A1 | 18-09-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2510401 A